**Europäisches Patentamt**

**European Patent Office**

**Office européen des brevets**

(19)

(11) Veröffentlichungsnummer : **0 196 490**
**B1**

(12) **EUROPÄISCHE PATENTSCHRIFT**

(45) Veröffentlichungstag der Patentschrift :
**26.04.89**

(21) Anmeldenummer : **86102931.2**

(22) Anmeldetag : **05.03.86**

(51) Int. Cl.⁴ : **F 16 D 1/06**, F 16 C 3/02,
B 23 K 33/00

(54) **Gelenkwellen-Gelenkkopf-Anordnung und Verfahren zu deren Fertigung.**

(30) Priorität : **15.03.85 DE 3509306**

(43) Veröffentlichungstag der Anmeldung :
**08.10.86 Patentblatt 86/41**

(45) Bekanntmachung des Hinweises auf die Patenterteilung : **26.04.89 Patentblatt 89/17**

(84) Benannte Vertragsstaaten :
**DE FR GB IT SE**

(56) Entgegenhaltungen :
**EP-A- 0 030 996**
**CH-A- 202 300**
**DE-C- 467 445**
**FR-A- 485 063**
**FR-A- 678 066**
**FR-A- 2 406 744**
**US-A- 2 037 962**

(73) Patentinhaber : **Iveco Magirus Aktiengesellschaft**
**Schillerstrasse 2 Postfach 27 40**
**D-7900 Ulm/Donau (DE)**

(72) Erfinder : **Peszt, Georg**
**Graf-Zeppelin-Strasse 3**
**D-7904 Erbach (DE)**

(74) Vertreter : **Socha, Peter**
**Iveco Magirus AG Postfach 2740 Schillerstrasse 2**
**D-7900 Ulm (DE)**

EP 0 196 490 B1

## Beschreibung

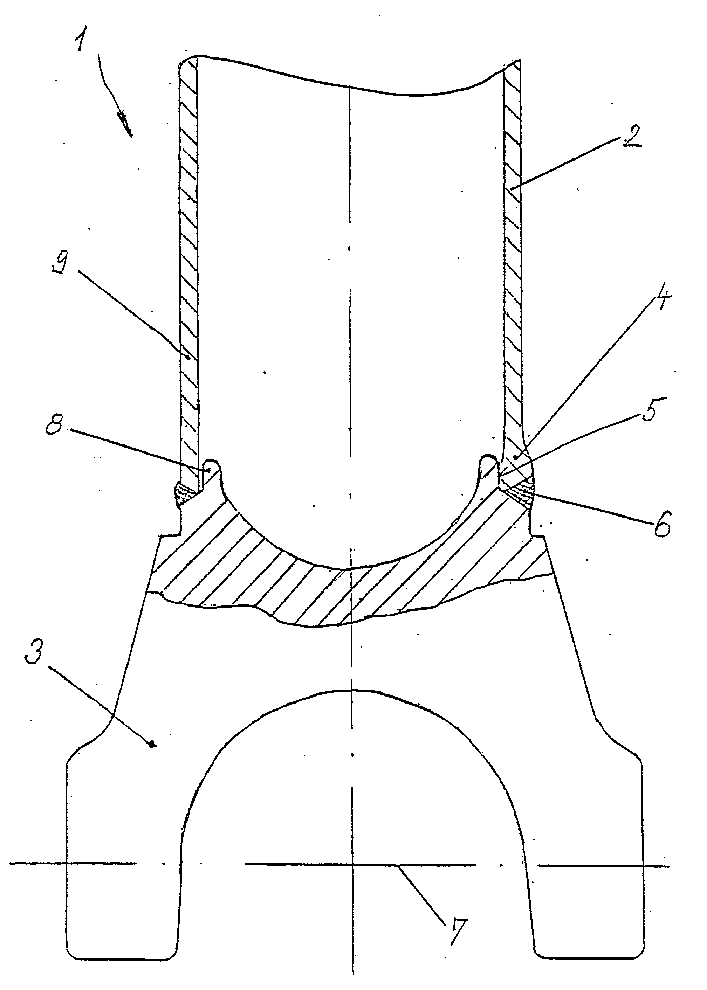

Die Erfindung betrifft eine Gelenkwellen-Gelenkkopf-Anordnung mit einer Gelenkwelle und einem koaxialen angeschweißten Gelenkkopf und ein Verfahren zu deren Herstellung. Die Erfindung geht im Oberbegriff des Anspruchs 1 von einem Stand der Technik aus wie er auf der linken Seite der Figur des Ausführungsbeispiels gezeigt ist.

Es ist bekannt, Gelenkkopf und Gelenkwelle einer Drehantriebseinrichtung in der Weise miteinander zu verbinden, daß beide Teile koaxial auf eine konische Schrägfläche des Gelenkkopfes zwecks Zentrierung gesetzt und der verbleibende HV- oder V-förmige Umfangsspalt verschweißt wird. Rohre haben im Lieferzustand Toleranzen im Innendurchmesser abhängig vom Nenndurchmesser und den vorhandenen Wanddicken. Bei Schweißverbindungen, beispielsweise HV- oder V-Naht, mit einem eingesteckten tolerierten Gelenkkopf führt dies in der Regel zu einem Spalt. Bei Belastung des Bauteiles mit dem Spalt entsteht an der Wurzelseite der Schweißnaht eine Kerbwirkung und mindert die Haltbarkeit. Auch wird in der Wärmeeinflußzone des Grundwerkstoffs die Festigkeit der Rohre gemindert. Zusammen mit den ungünstigen Toleranzensummierungen, der ungünstigen Kraftflußumlenkung im Wurzelbereich der V-Naht, Gefügeveränderungen, ergeben sich insgesamt also eine Beeinträchtigung des übertragbaren Drehmoments der Teile, der Wechselfestigkeit und schließlich der Lebensdauer der Gelenkwelle selbst.

Aufgabe der Erfindung ist die Schaffung einer Gelenkwellen-Gelenkkopf-Anordnung, der eingangs genannten Art, die mit Hilfe sehr einfacher Mittel eine Erhöhung des übertragbaren Drehmomentes, der Wechselfestigkeit und schließlich der Lebensdauer der Gelenkwelle selbst erzielt.

Gelöst wird die der Erfindung zugrundeliegende Aufgabe gemäß Anspruch 1 dadurch daß die Gelenkwelle ein dem Gelenkkopf zugewandtes Ende mit außen und innen verdickter Rohrwand besitzt und der Innenumfang des verdickten Gelenkwellenendes in einem Gleitsitz zum Gelenkkopf steht, wobei die Stirnseite des verdickten Gelenkwellenendes über eine äußere geschlossene Umfangs-HV- oder V-Naht mit dem Gelenkkopf verschweißt ist.

Besonders vorteilhaft ist es, wenn der Innenumfang bzw. die Stoß- oder Gleitsitzfläche zwischen dem verdickten Gelenkwellenende und dem zugehörigen Gelenkkopf konisch ausgebildet ist, so daß das spaltlose Zusammenführen in jedem Fall sichergestellt ist, selbst dann, wenn der Radius des Innenumfangs des verdickten Gelenkwellenendes nicht mit exakter Toleranz zwecks Ausbildung eines Gleitsitzes hergestellt worden ist. Beide Teile werden aufgrund der Konizität solange koaxial aufeinander zubewegt, bis flächige Berührung gegeben ist, worauf mit dem Verschweißen begonnen werden kann. Es sei betont, daß ein derartiger Gleitsitz ohne Kraftschluß (Keilwirkung) realisiert wird. Die Kraftübertragung erfolgt ausschließlich durch die Schweißnaht.

Die Erfindung kennzeichnet sich ferner durch ein Verfahren zum Zusammenfügen einer hohlen Gelenkwelle mit einem Gelenkkopf durch Schweißen, bei welchem vor dem Zusammenfügen das zu verbindende Ende der Gelenkwelle durch einen Preßroll- oder Preßstauchvorgang auf einen, vorzugsweise kegelförmigen Innenumfang für einen flächigen Gleitsitz zum Gelenkkopf unter Bildung in etwa der rechtwinkeligen Stirnseite oder der halben V-Aussparung für die Schweißnaht im Stirnumfangsbereich des Gelenkwellenendes innen und außen verdickt wird, und nach einem koaxialen Zusammenfügen der dann in einem Gleit-Paßsitz zueinanderstehenden Teile diese durch eine äußere Umfangs-HV- oder V-Naht verschweißt werden. Für den Preßroll- oder Preßstauchvorgang finden an sich bekannte Werkzeuge Verwendung. Es wird bei einem mit einer Gelenkwelle zu verbindenden Gelenkkopf der Außenumfang des Verbindungsflansches des Kopfes vorab gemessen und, das Stauchwerkzeug in seinem Radius so eingestellt, daß gerade der Innenumfang der Gelenkwelle entsprechend gestaucht bzw. verkleinert wird, um einen exakten flächigen Gleitsitz zwischen den Teilen nach einem Zusammenfügen zu erreichen.

Durch die Erfindung werden somit die bei einer Fertigung der Teile einhergehenden Toleranzen bzw. Paßungenauigkeiten auf einfache Weise auf ein Minimum verringert, bei gleichzeitiger Ausbildung der rechtwinkeligen Stirnseite oder der halben V-Aussparung sowie einer Verdickung der Wand von der Stirnseite her. Der Preßroll- oder Preßstauchvorgang vom Gelenkwellenende her kann im kalten Zustand oder bei größeren Wanddicken im warmen Zustand erfolgen. Die Länge der Werkstoffstauchung muß derart gestaltet sein, daß die Wärmeeinflußzone der Schweißnaht mit ausreichender Sicherheit keinen Einfluß auf den Grundwerkstoff ausübt. Zusammenfassend ergeben sich folgende Vorteile :

1. Verbesserung des Kraftflusses ;
2. Einengung der Paßtoleranzen ;
3. Verlagerung des Istquerschnitts der Gelenkwelle von der Wärmeeinflußzone der Schweißnaht weg ;
4. Aufgrund der Maßnahme gemäß Punkt 3 kein negativer Einfluß der Grobkornbildung bzw. Festigkeitsminderung durch die Schweißwärme der Übergangsbereiche im Gefüge, und
5. Erhöhung der Festigkeit bzw. Lebensdauer der Gelenkwelle.

Die Erfindung wird nachfolgend anhand eines Ausführungsbeispiels unter Bezugnahme auf die beigefügte aus einer einzigen Figur bestehende Zeichnung näher erläutert.

In der Zeichnung ist ein schematischer Axialschnitt des Verbindungsbereichs einer Gelenkwellen-Gelenkkopf-Anordnung gezeigt, wobei die Erfindung auf der rechten Seite im Vergleich zum Stand der Technik auf der linken Seite veranschaulicht ist.

Die Anordnung 1 besteht insbesondere aus einer Gelenkwelle 2 in Rohrausbildung und einem Gelenkkopf 3 mit einer quer verlaufenden Gelenkkopfachse 7 senkrecht zur Achse der Gelenkwelle 2.

Gelenkwelle 2 und Gelenkkopf 3 sind koaxial zusammengefügt in einer Weise, daß die Gelenkwelle 2 auf einen Axialflansch des Gelenkkopfes 3 aufgesteckt ist. Der Axialflansch 8 weist bei seiner Basis in Richtung der Gelenkkopfachse 7 eine konische Umfangserweiterung auf, wodurch die eine Hälfte der V-Aussparung für die Schweißnaht geschaffen wird.

Wie aus der Zeichnung ersichtlich, ist bei bekannten Gelenkwellen-Gelenkkopf-Ausbildungen ein Spalt zwischen Rohrwand 9 der Gelenkwelle 2 und Axialflansch 8 des Gelenkkopfs 3 vorhanden, und zwar aufgrund von Fertigungstoleranzen angelieferter Gelenkwellen 2 bei tolerierten Gelenkköpfen 3. Bei Belastung des Bauteils mit Spalt entsteht an der Wurzelseite der V-förmigen Schweißnaht 6 eine Kerbwirkung und mindert die Haltbarkeit.

Bei der Erfindung gemäß der rechten Seite der Zeichnung ist die Rohrwand 9 im Bereich des Anschlusses zum Gelenkkopf 3 als verdicktes Ende 4 ausgebildet. Die Verdickung der Rohrwand von der Stirnseite her zwecks Schaffung eines kleineren Innendurchmessers der Rohrwand 9 für eine Gleitsitzausbildung zum Axialflansch 8 wird vor einem Zusammenfügen der Bauteile dadurch erreicht, daß das Gelenkwellenende im kalten Zustand oder bei größeren Wanddicken im warmen Zustand angestaucht wird, und zwar durch einen Preßstauch- oder durch einen Preßrollvorgang. Die Länge der Werkstoffstauchung ist derart gestaltet, daß die Wärmeeinflußzone der Schweißnaht mit ausreichender Sicherheit keinen Einfluß auf den Grundwerkstoff ausübt. Dadurch ergeben sich verbesserte Kraftflußverhältnisse sowie Einengung der Paßtoleranzen und insgesamt eine Erhöhung der Festigkeit und der Lebensdauer der Gelenkwelle.

**Patentansprüche**

1. Gelenkwellen-Gelenkkopf-Anordnung (1), mit einer hohlen Gelenkwelle (2) und einem koaxialen angeschweißten Gelenkkopf (3), dadurch gekennzeichnet, daß die Gelenkwelle (2) ein dem Gelenkkopf (3) zugewandtes Ende (4) mit außen und innen verdickter Rohrwand besitzt und der Innenumfang (5) des verdickten Gelenkwellenendes (4) in einem Gleitsitz zum Gelenkkopf (3) steht, wobei die Stirnseite des verdickten Gelenkwellenendes (4) über eine äußere geschlossene Umfangs-HV- oder V-Naht (6) mit dem Gelenkkopf (3) verschweißt ist.

2. Gelenkwellen-Gelenkkopf-Anordnung (1) nach Anspruch 1, gekennzeichnet durch ein preßgestauchtes verdicktes Gelenkwellenende (4).

3. Gelenkwellen-Gelenkkopf-Anordnung nach Anspruch 1, gekennzeichnet durch ein preßgerolltes verdicktes Gelenkwellenende.

4. Gelenkwellen-Gelenkkopf-Anordnung (1) nach einem der Ansprüche 1 bis 3, dadurch gekennzeichnet, daß der Innenumfang (5) bzw. die Stoß- oder Gleitsitzfläche zwischen dem verdickten Gelenkwellenende (4) und dem Gelenkkopf (3) konisch ausgebildet ist.

5. Verfahren zum Zusammenfügen einer hohlen Gelenkwelle (2) mit einem Gelenkkopf (3) durch Schweißen, dadurch gekennzeichnet, daß vor dem Zusammenfügen das Ende (4) der Gelenkwelle (2) durch einen Preßstauch- oder Preßrollvorgang auf einen, vorzugsweise kegelförmigen, Innenumfang (5) für eine flächige Gleitsitzanordnung zum Gelenkkopf (3) unter Bildung in etwa einer rechtwinkeligen Stirnseite bzw. der halben V-Aussparung für die Schweißnaht im Stirnumfangsbereich des Gelenkwellenendes (4) innen und außen verdickt wird, und daß nach einem koaxialen Zusammenfügen der dann in einem flächigen Gleit-Paßsitz stehenden Teile (2, 3) diese durch eine äußere Umfangs-HV- oder V-Naht (6) verschweißt werden.

**Claims**

1. A universal-joint shaft/joint-head arrangement (1) including a hollow universal-joint shaft (2) and a joint head (3) coaxially welded thereto, characterized in that the pipe wall of the shaft's (2) end portion (4) facing the head (3) is externally and internally thickened, that the inner circumference (5) of the thickened shaft end portion (4) slidingly fits on to the head (3), and that the end face of the thickened shaft end portion (4) is welded to the head (3) by means of an externally-applied continuous circumferential HV- or V-seam (6).

2. A universal-joint shaft/joint-head arrangement (1) according to claim 1, characterized in that thickening of the shaft end portion (4) is effected by a pressure-swageing operation.

3. A universal-joint shaft/joint-head arrangement (1) according to claim 1, characterized in that thickening of the shaft end portion (4) is effected by a pressure-rolling operation.

4. A universal-joint shaft/joint-head arrangement (1) according to any of the claims 1 to 3, characterized in that the inner circumference (5), or the push or sliding seat, between the thickened end portion (4) of the shaft and the joint head (3) is tapered.

5. A method of joining, by means of welding, a hollow universal-joint shaft (2) to a joint head (3), characterized in that, prior to joining the shaft to the head, the end portion (4) of the shaft (2) is internally and externally thickened — by a pressure-swageing or a pressure-rolling operation — to a, preferably conical, inner circumference (5) for the purpose of arranging it with a sliding fit on the joint head (3) and of forming a substantially rectangular end face or one half of a V-shaped recess serving to accommodate the welding seam to be positioned in the circumferential region of the end face, and in that thereafter the two pieces (2, 3), once they have been coaxially joined and are assembled with a sliding-press fit, are welded together by means of an HV- or V-seam (6) extending around their external circumference.

## Revendications

1. Dispositif d'arbre à cardan (1), avec un arbre de transmission creux (2) et une fourche soudée coaxialement (3), caractérisé en ce que l'arbre de transmission (2) possède une extrémité (4) dirigée vers la fourche (3) avec une paroi de tube épaissie intérieurement et extérieurement et le périmètre intérieur (5) de l'extrémité d'arbre de transmission épaissie (4) est en ajustement glissant avec la fourche (3), la face frontale de l'extrémité épaissie de l'arbre de transmission (4) est soudée à la fourche par une soudure en V ou en demi-V qui fait tout le tour du tube.

2. Dispositif d'arbre à cardan (1) selon la revendication 1, caractérisé par une extrémité d'arbre de transmission (4) épaissie par repoussage.

3. Dispositif d'arbre à cardan (1) selon la revendication 1, caractérisé par une extrémité d'arbre de transmission épaissie par roulage.

4. Dispositif d'arbre à cardan (1) selon l'une des revendications 1 à 3, caractérisé en ce que le périmètre interne (5) ou la surface de contact ou d'ajustement glissant entre l'extrémité épaissie d'arbre de transmission (4) et la fourche (3) est de forme conique (3).

5. Procédé d'assemblage d'un arbre de transmission creux (2) avec une fourche par soudage, caractérisé en ce que, avant l'assemblage, l'extrémité (4) épaissie intérieurement et extérieurement par un procédé de repoussage ou de roulage, sur un diamètre intérieur (5) conique de préférence, pour un ajustement de surface glissant avec la fourche (3), en formant dans un plan frontal, à peu près perpendiculaire, le demi-évidement en V pour le cordon de soudure dans la zone frontale périphérique de l'extrémité (4) de l'arbre de transmission, et en ce qu'après, un montage axial des pièces (2, 3) qui sont en ajustement glissant, celles-ci sont soudées par une soudure externe en V ou en demi-V qui fait tout le tour du tube.